# EUROPÄISCHE PATENTANMELDUNG

(11) **EP 1 263 109 A2**
(43) Veröffentlichungstag der Anmeldung: **04.12.2002**
(21) Anmeldenummer: 02405419.9
(22) Anmeldetag: 27.05.2002
(51) Int. Cl.: H02J 3/24

(54) **Stromrichterschaltung**

(30) Priorität: 01.06.2001 US 870670
(71) Anmelder: ABB Schweiz AG, 5400 Baden (CH)
(72) Erfinder: Fischer, Philippe, 5611 Anglikon (CH); Maibach, Philippe, 5200 Brugg (CH); Manjrekar, Madhav, New Berlin, WI 53151 (US); Daniel, John, Apex, NC 27502 (US)
(74) Vertreter: ABB Patent Attorneys

(57) **Zusammenfassung**

Es wird eine Stromrichterschaltung zur Spannungserhaltung in einem elektrischen Wechselspannungsversorgungsnetz (1) angegeben, wobei das elektrische Wechselspannungsversorgungsnetz (1) für jede Phase (R; S; T) eine zugehörige Spannungsquelle (UR; US; UT) zur Speisung einer elektrischen Last (2) aufweist, wobei die Stromrichterschaltung für jede Phase (R; S; T) jeweils einen Wechselrichter (3) aufweist, der gleichspannungsseitig über einen Speicherkondensator (4) mit einer Speiseeinrichtung (5) verbunden ist.

Jeder Wechselrichter (3) ist wechselspannungsseitig seriell in die jeweilige Phase (R; S; T) zwischen der zugehörigen Spannungsquelle (UR; US; UT) und der elektrischen Last (2) eingeschaltet, wobei die Speiseeinrichtung (5) wechselspannungsseitig an mindestens zwei Phasen (R; S; T) zwischen den zugehörigen Spannungsquellen (UR; US; UT) und den jeweiligen Wechselrichtern (3) angeschlossen ist.

## Beschreibung

### Technisches Gebiet

Die vorliegende Erfindung bezieht sich auf das Gebiet der Leistungselektronik. Sie betrifft eine Stromrichterschaltung zur Spannungserhaltung in einem elektrischen Wechselspannungsversorgungsnetz gemäss dem Oberbegriff des unabhängigen Anspruchs.

### Stand der Technik

Herkömmliche Stromrichterschaltungen wie sie heute insbesondere zur Kompensation von Spannungseinbrüchen der Netzspannung eines elektrischen einphasigen oder mehrphasigen Wechselspannungsversorgungsnetzes, infolge von Kurzschlüssen oder Lastwechseln, eingesetzt werden, sind gängigerweise zwischen der Spannungsquelle einer Phase des elektrischen Wechselspannungsversorgungsnetzes und einer durch die Spannungsquelle gespeiste elektrische Last eingeschaltet. Eine solche Stromrichterschaltung ist beispielsweise in der US 5,329,222 angegeben. Darin ist ein Speicherkondensator gleichspannungsseitig mit einem Wechselrichter verbunden, wobei der Speicherkondensator als Energiespeicher dient und den Wechselrichter speist. Weiterhin ist eine Speiseeinrichtung vorgesehen, die über den Speicherkondensator gleichspannungsseitig mit dem Wechselrichter verbunden ist und der Speisung, insbesondere der Vorladung des Speicherkondensators dient. Der Speicherkondensator weist einen hohen Kapazitätswert auf, damit der Wechselrichter auch bei einem längeren Spannungseinbruch in der Netzspannung genügend Energie zur Kompensation dieses Spannungseinbruchs in das elektrische Wechselspannungsversorgungsnetz einspeisen kann. Gemäss der US 5,329,222 ist der Wechselrichter wechselspannungsseitig an eine Sekundärseite eines Transformators angeschlossen. Die Primärseite des Transformators ist in eine Phase des elektrischen Wechselspannungsnetzes eingeschaltet.

Problematisch bei einer Stromrichterschaltung nach der US 5,329,222 ist, dass zur Einspeisung elektrischer Energie zur Kompensation eines Spannungseinbruchs in der Netzspannung des elektrischen Wechselspannungsversorgungsnetzes ein Transformator benötigt wird, der aufgrund seiner grossen Streuinduktivität einen entsprechend grossen Platzbedarf benötigt, montageintensiv ist und somit erhebliche Kosten, insbesondere Materialkosten verursacht. Weiterhin ist der als Energiespeicher eingesetzte Speicherkondensator nach der US 5,329,222 als Kondensatorbatterie realisiert, damit der entsprechend grosse Kapazitätswert erreicht werden kann. Ein derart realisierter Speicherkondensator verursacht somit zusätzliche Kosten aufgrund seines erheblichen Platzbedarfs und seines Montage- und Verschienungsaufbaus.

### Darstellung der Erfindung

Aufgabe der Erfindung ist es deshalb, eine Stromrichterschaltung zur Spannungserhaltung in einem elektrischen Wechselspannungsversorgungsnetz, anzugeben, die einen besonders einfachen und kostengünstigen Aufbau aufweist, so dass der Montage- und Materialaufwand der Stromrichterschaltung minimiert wird. Diese Aufgabe wird durch die Merkmale des Anspruchs 1 gelöst. In den Unteransprüchen sind vorteilhafte Weiterbildungen der Erfindung angegeben.

Bei der erfindungsgemässen Stromrichterschaltung zur Spannungserhaltung in einem elektrischen Wechselspannungsversorgungsnetz, ist für jede Phase des Netzes ein Wechselrichter vorgesehen, der gleichspannungsseitig über einen Speicherkondensator mit einer Speiseeinrichtung verbunden ist. Jeder Wechselrichter ist erfindungsgemäss wechselspannungsseitig seriell in die jeweilige Phase zwischen einer zu der jeweiligen Phase zugehörigen Spannungsquelle und einer von den Spannungsquellen gespeisten elektrischen Last eingeschaltet. Dadurch kann besonders vorteilhaft auf einen an den Wechselrichter wechselspannungsseitig angeschlossenen Transformator zur Speisung der jeweiligen Phase verzichtet werden, wodurch die Stromrichterschaltung sehr einfach, wartungsextensiv und damit kostengünstig ist.

Desweiteren ist die Speiseeinrichtung erfindungsgemäss wechselspannungsseitig an mindestens zwei der Phasen zwischen den zugehörigen Spannungsquellen und den jeweiligen Wechselrichtern angeschlossen. Dadurch kann der Speicherkondensator bezüglich seines Kapazitätswertes klein gewählt werden, da die an die Phasen angeschlossene Speiseeinrichtung auch für längere Zeiträume elektrische Energie aus den Spannungsquellen beziehen kann, um den Speicherkondensator zu speisen. Somit kann besonders einfach gewährleistet werden, dass auch ein längerer Spannungseinbruch in der Netzspannung des elektrischen Wechselspannungsversorgungsnetzes durch die erfindungsgemässe Stromrichterschaltung kompensiert wird. Zudem geht mit der nun möglichen kleinen Dimensionierung des Kapazitätswertes des Speicherkondensators eine vorteilhafte Verringerung der Baugrösse und somit des Material- und Verschienungsaufwandes einher.

In einem bevorzugten Ausführungsbeispiel der erfindungsgemässen Stromrichterschaltung ist die Speiseeinrichtung bei einem mehrphasigen Wechselspannungsversorgungsnetz wechselspannungsseitig an jede der Phasen zwischen den zugehörigen Spannungsquellen und den jeweiligen Wechselrichtern angeschlossen. Dadurch ist zusätzlich die Möglichkeit einer symmetrischen Auslastung der Phasen bei einem Spannungseinbruch in der Netzspannung in einer der Phasen oder in mehreren Phasen durch Bezug elektrischer Energie der Speiseeinrichtung aus den von einem Spannungseinbruch nicht betroffenen Phasen gegeben. Darüber hinaus kann durch diese Massnahme vorteilhaft eine weitestgehend stabile und symmetrische Speisung der elektrischen Last, auch bei phasenmässig unsymmetrischen Spannungseinbrüchen in der Netzspannung erreicht werden.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

### Kurze Beschreibung der Zeichnungen

Es zeigen:
- Fig. 1: eine Ausführungsform einer erfindungsgemässen Stromrichterschaltung,
- Fig. 2: eine weitere Ausführungsform einer erfindungsgemässen Stromrichterschaltung,
- Fig. 3: einen Teilausschnitt der erfindungsgemässen Stromrichterschaltung gemäss Fig. 1 mit einer zusätzlichen einphasigen Oberschwingungsfilterschaltung und
- Fig. 4: einen Teilausschnitt der erfindungsgemässen Stromrichterschaltung gemäss Fig. 2 mit einer zusätzlichen dreiphasigen Oberschwingungsfilterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

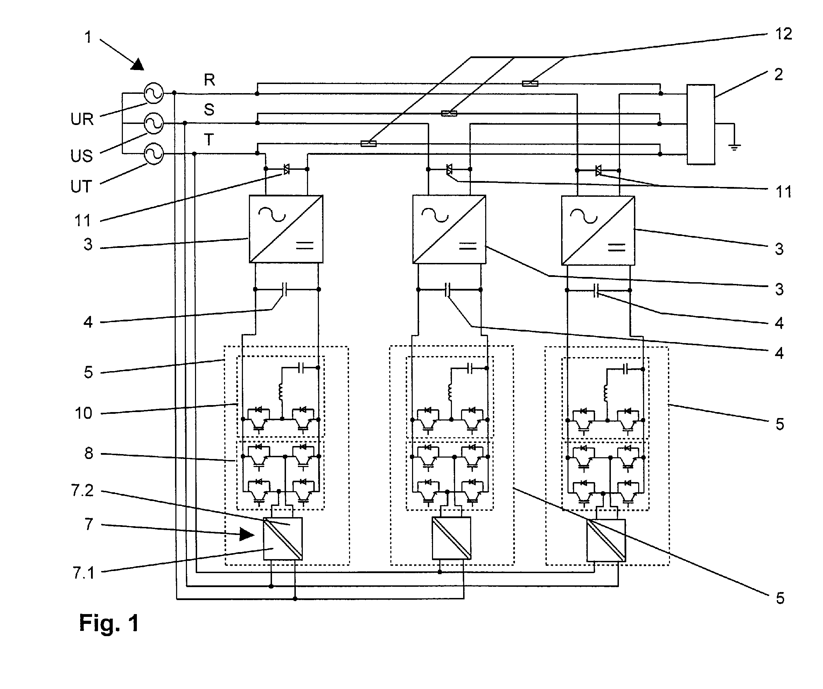

In Fig. 1 ist eine Ausführungsform einer erfindungsgemässen Stromrichterschaltung gezeigt, die der Spannungserhaltung in einem elektrischen Wechselspannungsversorgungsnetz 1 dient. Das elektrische Wechselspannungsversorgungsnetz 1 weist für jede seiner Phasen R, S, T jeweils eine zugehörige Spannungsquelle UR, US, UT auf, die zur Speisung einer an die Spannungsquellen UR, US, UT angeschlossen elektrischen Last 2 vorgesehen ist. Das elektrische Wechselspannungsnetz 1 ist gemäss Fig. 1 insbesondere dreiphasig ausgeführt. Gemäss Fig. 1 ist weiterhin für jede Phase R, S, T jeweils ein Wechselrichter 3 vorgesehen. Jeder Wechselrichter 3 ist gleichspannungsseitig über einen Speicherkondensator 4 mit einer Speiseeinrichtung 5 verbunden, die der Speisung des Speicherkondensators 4 dient. Der Wechselrichter 3 ist als einphasige einstufige Brückenschaltung oder als einphasige zweistufige Brückenschaltung mit ansteuerbaren Leistungshalbleiterschaltern realisiert, wobei diese Realisierungen der Übersichtlichkeit halber nicht dargestellt sind.

Erfindungsgemäss ist der Wechselrichter 3 gemäss Fig. 1 mit seiner Wechselspannungsseite seriell in die jeweilige Phase R, S, T des elektrischen Wechselspannungsversorgungsnetzes 1 zwischen der zugehörigen Spannungsquelle UR, US, UT und der elektrischen Last 2 eingeschaltet. Durch diese Massnahme kann vorteilhaft auf einen wie aus dem Stand der Technik bekannten an den Wechselrichter 3 wechselspannungsseitig angeschlossenen Transformator zur Speisung der jeweiligen Phase R, S, T verzichtet werden, so dass ein sehr einfacher, wartungsextensiver und damit kostengünstiger Aufbau der Stromrichterschaltung erreicht wird.

Desweiteren ist die Speiseeinrichtung 5 gemäss Fig. 1 erfindungsgemäss an ihrer Wechselspannungsseite an mindestens zwei der Phasen R, S, T zwischen den zugehörigen Spannungsquellen UR, US, UT und den jeweiligen Wechselrichtern 3 angeschlossen. Auf einen mit einem grossen Kapazitätswert dimensionierten Speicherkondensator 4 kann somit verzichtet werden. Damit kann ein bezüglich des Kapazitätswertes klein gewählter Speicherkondensator 4 eingesetzt werden, der auch bei längeren Spannungseinbrüchen in der Netzspannung des elektrischen Wechselspannungsversorgungsnetzes 1 durch die Speiseeinrichtung 5 ausreichend gespeist ist. Durch diese Speisung des Speicherkondensators 4 ist vorteilhaft stets genügend elektrische Energie im Speicherkondensator 4 vorhanden, damit der Wechselrichter 3 eine erfolgreiche Kompensation des auftretenden Spannungseinbruchs in der Netzspannung durch Einspeisung elektrischer Energie in die entsprechende Phase R, S, T auch über einen längeren Zeitraum hin durchführen kann. Weiterhin wird durch den bezüglich des Kapazitätswertes klein gewählten Speicherkondensator 4 eine vorteilhafte Verringerung der Baugrösse und ein damit einhergehender kleiner Material- und Verschienungsaufwand erreicht.

Jede Speiseeinrichtung 5 der Stromrichterschaltung ist gemäss Fig. 1 bei einem elektrischen mehrphasigen Wechselspannungsversorgungsnetz 1 erfindungsgemäss an eine zweite Phase R, S, T und an eine dritte Phase R, S, T, wobei der Wechselrichter 3 an eine erste Phase R, S, T angeschlossen ist. Dadurch kann die Speiseeinrichtung 5 vorteilhaft elektrische Energie bei einem in der Phase R, S, T des eingeschalteten Wechselrichters 3 auftretender Spannungseinbruch aus den beiden anderen nicht von dem Spannungseinbruch betroffenen Phasen R, S, T beziehen, so dass der Spannungseinbruch in der betroffenen Phase R, S, T besonders effektiv kompensiert werden kann.

Gemäss Fig. 1 weist die Speiseeinrichtung 5 einen Einphasentransformator 7 auf, der mit seiner Primärseite 7.1 an die zweite Phase R, S, T und an die dritte Phase R, S, T zwischen den zugehörigen Spannungsquellen UR, US, UT und den jeweiligen Wechselrichtern 3 angeschlossen ist. Der Einphasentransformator 7 dient dabei der Potentialtrennung der Stromrichterschaltung, insbesondere der Speiseeinrichtung 5 bezüglich der angeschlossenen Phasen R, S, T. Weiterhin umfasst die Speiseeinrichtung 5 eine an einer Sekundärseite 7.2 des Einphasentransformators 7 angeschlossene einphasige Gleichrichterschaltung 8. Die einphasige Gleichrichterschaltung 8 dient der Gleichrichtung der Wechselspannung der Sekundärseite 7.2 des Einphasentransformators 7 und ist gleichspannungsseitig mit dem Speicherkondensator 4 verbunden. Es hat sich als vorteilhaft erwiesen, dass die einphasige Gleichrichterschaltung 8 als einphasige einstufige Brückenschaltung oder als einphasige zweistufige Brückenschaltung realisiert ist, so dass ein einfacher Aufbau mit geringem Bauteileaufwand erreicht werden kann. In Fig. 1 ist beispielhaft eine einphasige Gleichrichterschaltung 8 als einphasige einstufige Brückenschaltung gezeigt. Darüber hinaus weist die Speiseeinrichtung 5 gemäss Fig. 1 eine gleichspannungsseitig parallel zu der einphasigen Gleichrichterschaltung 8 geschaltete und mit dem Speicherkondensator 4 verbundene Speichereinheit 10 auf. Die Speichereinheit 10 ist durch ein elektrisches Speicherelement, vorzugsweise durch eine Induktivität und einen Kondensator, sowie durch zwei in Serie geschaltete ansteuerbare Leistungshalbleiterschalter mit jeweils einer zu jedem Leistungshalbleiterschalter antiparallel geschalteten Diode gebildet. Das Speicherelement dient vorteilhaft der Spannungsanpassung der an dem Speicherkondensator 4 anliegenden Spannung. Mittels dieser Speichereinheit 10 kann zudem elektrische Energie, welche über den Einphasentransformator 7 und der einphasigen Gleichrichterschaltung 8 aus den entsprechenden Phasen R, S, T bezogen wird, gespeichert werden und vorteilhaft bei Bedarf zusätzlich zur Speisung des Speicherkondensators 4 genutzt werden.

In einer der Übersichtlichkeit halber nicht dargestellten Ausführungsform der Stromrichterschaltung ist bei einem einphasigen elektrischen Wechselspannungsversorgungsnetz 1, wie es beispielsweise bei einem elektrischen Bahnnetz vorliegt, erfindungsgemäss der Wechselrichter 3 an die erste Phase R, S und die Speiseeinrichtung 5 an die erste Phase R, S und an die zweite Phase R, S zwischen den zugehörigen Spannungsquellen UR, US und den jeweiligen Wechselrichtern 3 angeschlossen. Damit werden die bereits erwähnten Vorteile der Stromrichterschaltung auch bei einem einphasigen Wechselspannungsversorgungsnetz 1 erreicht.

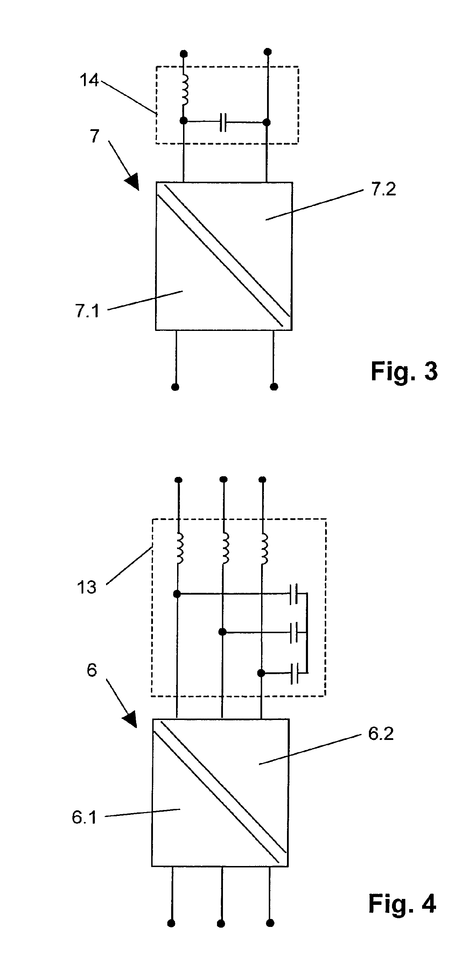

In Fig. 3 ist ein Teilausschnitt der erfindungsgemässen Stromrichterschaltung gemäss Fig. 1 mit einer zusätzlichen einphasigen Oberschwingungsfilterschaltung 14 gezeigt. Die einphasige Oberschwingungsfilterschaltung 14 ist parallel zur Sekundärseite 7.2 des Einphasentransformators 7 geschaltet und mit der einphasigen Gleichrichterschaltung 8 verbunden. Gemäss Fig. 3 ist die Verbindung der einphasigen Oberschwingungsfilterschaltung 14 zur einphasigen Gleichrichterschaltung 8 an der Wechselspannungsseite der einphasigen Gleichrichterschaltung 8 realisiert. Vorteilhaft umfasst die einphasige Oberschwingungsfilterschaltung 14 einen auf eine Oberschwingungsfrequenz abgestimmten Resonanzkreis, so dass etwaige Oberschwingungen in den entsprechenden Phasen R, S, T durch die Filterwirkung der einphasigen Oberschwingungsfilterschaltung 14 von der Last 2 sowie auch von den Spannungsquellen UR, US, UT und damit vom Wechselspannungsversorgungsnetz 1 ferngehalten werden können.

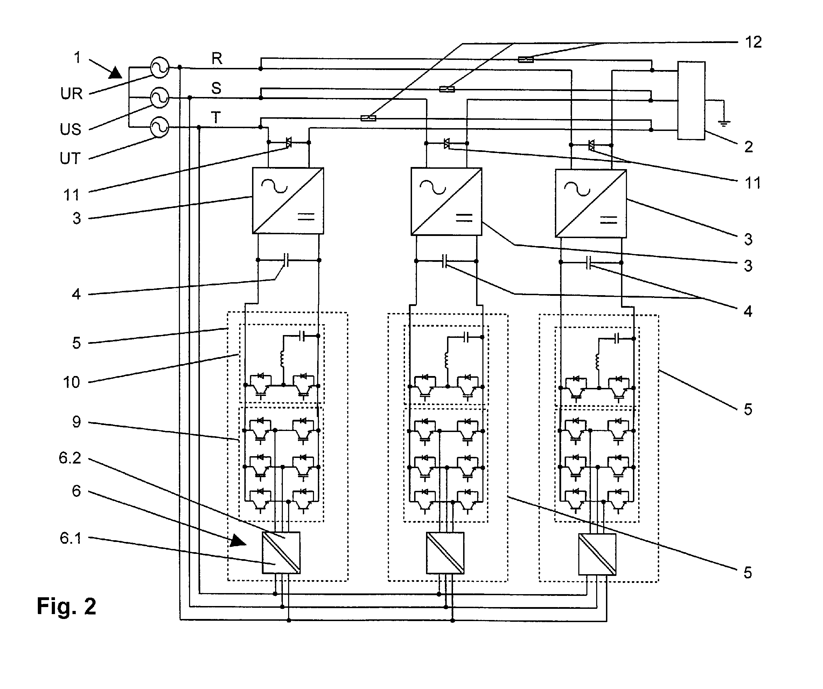

In Fig. 2 ist eine weitere Ausführungsform einer erfindungsgemässen Stromrichterschaltung gezeigt. Im Unterschied zu der in Fig. 1 dargestellten Ausführungsform der erfindungsgemässen Stromrichterschaltung ist bei der Stromrichterschaltung gemäss Fig. 2 bei einem mehrphasigen elektrischen Wechselspannungsversorgungsnetz die Speiseeinrichtung 5 an ihrer Wechselspannungsseite an jede der Phasen R, S, T zwischen den zugehörigen Spannungsquellen UR, US, UT und den jeweiligen Wechselrichtern 3, d.h. an die erste Phase R, S, T, an die zweite Phase R, S, T und an die dritte Phase R, S, T angeschlossen. Der Wechselrichter ist gemäss Fig. 2 an die erste Phase R, S, T angeschlossen ist. Dadurch ist zusätzlich zu den bereits bezüglich der Ausführungsform der erfindungsgemässen Stromrichterschaltung gemäss Fig. 1 erwähnten Vorteilen eine symmetrische Auslastung der Phasen R, S, T bei einem Spannungseinbruch in der Netzspannung in einer der Phasen R, S, T oder in mehreren Phasen R, S, T durch Bezug elektrischer Energie der Speiseeinrichtung 5 aus den von dem Spannungseinbruch nicht betroffenen Phasen R, S, T ermöglicht.

Gemäss Fig. 2 weist die Speiseeinrichtung 5 erfindungsgemäss einen Mehrphasentransformator 6 auf, der insbesondere dreiphasig ausgeführt ist. Der Mehrphasentransformator 6 ist mit seiner Primärseite 6.1 an jede der Phasen R, S, T zwischen den zugehörigen Spannungsquellen UR, US, UT und den jeweiligen Wechselrichtern 3, d.h. an die erste Phase R, S, T, an die zweite Phase R, S, T und an die dritte Phase R, S, T angeschlossen. Der Mehrphasentransformator 6 dient dabei der Potentialtrennung der Stromrichterschaltung, insbesondere der Speiseeinrichtung 5 bezüglich der angeschlossenen Phasen R, S, T. Weiterhin umfasst die Speiseeinrichtung 5 eine an einer Sekundärseite 6.2 des Mehrphasentransformators 6 angeschlossene dreiphasige Gleichrichterschaltung 9. Die dreiphasige Gleichrichterschaltung 9 dient der Gleichrichtung der Wechselspannung der Sekundärseite 6.2 des Mehrphasentransformators 6 und ist gleichspannungsseitig mit dem Speicherkondensator 4 verbunden. Es hat sich als vorteilhaft erwiesen, dass die dreiphasige Gleichrichterschaltung 9 als dreiphasige einstufige Brückenschaltung oder als dreiphasige zweistufige Brückenschaltung realisiert ist, so dass ein einfacher Aufbau mit wenigen Bauteilen erzielt werden kann. In Fig. 1 ist beispielhaft eine dreiphasige Gleichrichterschaltung 9 als dreiphasige einstufige Brückenschaltung gezeigt. Ferner weist die Speiseeinrichtung 5 gemäss Fig. 3 eine gleichspannungsseitig parallel zu der dreiphasigen Gleichrichterschaltung 8 geschaltete und mit dem Speicherkondensator 4 verbundene Speichereinheit 10 auf, die bezüglich ihres Aufbaus der bereits beschriebenen Speichereinheit 10 gemäss Fig. 1 entspricht. Somit ist es mit der Speichereinheit 10 gemäss Fig. 2 ebenfalls möglich, elektrische Energie, welche über den Mehrphasentransformator 6 und der dreiphasigen Gleichrichterschaltung 9 aus den entsprechenden Phasen R, S, T bezogen wird, zu speichern und vorteilhaft bei Bedarf zusätzlich zur Speisung des Speicherkondensators 4 zu nutzten.

In Fig. 4 ist ein Teilausschnitt der erfindungsgemässen Stromrichterschaltung gemäss Fig. 2 mit einer zusätzlichen dreiphasigen Oberschwingungsfilterschaltung 13 dargestellt. Die dreiphasige Oberschwingungsfilterschaltung 13 ist parallel zur Sekundärseite 6.2 des Mehrphasentransformators 6 geschaltet und mit der dreiphasigen Gleichrichterschaltung 9 verbunden. Gemäss Fig. 4 ist die Verbindung der dreiphasigen Oberschwingungsfilterschaltung 13 zur dreiphasigen Gleichrichterschaltung 9 an der Wechselspannungsseite der dreiphasigen Gleichrichterschaltung 9 realisiert. Vorteilhaft umfasst die dreiphasige Oberschwingungsfilterschaltung 13 einen auf eine Oberschwingungsfrequenz abgestimmten Resonanzkreis, so dass etwaige Oberschwingungen in den entsprechenden Phasen durch die Filterwirkung der dreiphasigen Oberschwingungsfilterschaltung 13 von der Last 2 sowie auch von den Spannungsquellen UR, US, UT und damit vom Wechselspannungsversorgungsnetz 1 ferngehalten werden können.

Ferner ist gemäss Fig. 1 und Fig. 2 erfindungsgemäss ein ansteuerbarer Leistungshalbleitertrennschalter 11 vorgesehen, der parallel zur Wechselspannungsseite des Wechselrichters 3 geschaltet ist. Der ansteuerbare Leistungshalbleitertrennschalter 11 dient der schnellen Abtrennung des Wechselrichters 3 von der Phase R, S, T, in die der Wechselrichter 3 eingeschaltet ist, falls ein fehlerhaftes Betriebsverhalten des Wechselrichters 3 oder ein Lastkurzschluss auftritt. Eine derartige Abtrennung erfolgt durch Schliessen des Leistungshalbleitertrennschalters 11, so dass der Wechselrichter 3 überbrückt ist, wobei die Abtrennung vorzugsweise in einem zeitlichen Bereich von 5µs bis 10µs erfolgt. Der Leistungshalbleiterstrennschalter 11 ist vorteilhaft als Thyristor, insbesondere als integrierter Thyristor mit kommutierter Ansteuerelektrode (IGCT) ausgeführt, so damit der vorstehend genannte zeitliche Bereich der Abtrennung erreicht werden kann.

Gemäss Fig. 1 und Fig. 2 ist darüber hinaus erfindungsgemäss für jede Phase R, S, T ein Abtrennschalter 12 vorgesehen, der parallel zu jedem in die jeweilige Phase R, S, T eingeschalteten Wechselrichter 3 geschaltet ist. Der Abtrennschalter 12 ist vorzugsweise mechanisch oder als elektronischer Leistungsschalter, insbesondere Leistungshalbleiterschalter ausgeführt. Bei einem Fehler in der entsprechenden Phase R, S, T und/oder bei einem bereits vorstehend erwähnten fehlerhaften Betriebsverhalten des jeweiligen Wechselrichters 3 wird der Abtrennschalter 12 geschlossen, so dass ein Bypass bezüglich des entsprechenden Wechselrichters 3 gebildet ist und der Wechselrichter 3 überbrückt ist.

Die erfindungsgemässe Stromrichterschaltung stellt insgesamt eine besonders einfache, effiziente und kostengünstige Lösung dar, um einen Spannungseinbruch in der Netzspannung in einer der Phasen R, S, T oder in mehreren Phasen R, S, T des elektrischen Wechselspannungsversorgungsnetzes 1 zu kompensieren. Zudem ermöglicht die erfindungsgemässe Stromrichterschaltung eine Beeinflussung der Netzspannung in einer oder mehreren Phasen R, S, T, falls eine Überspannung in einer oder mehreren dieser Phasen R, S, T auftritt. In diesem Fall speist der Wechselrichter 3 elektrische Energie aus der oder den betroffenen Phasen R, S, T in den Speicherkondensator 4, so dass die Überspannung in der Netzspannung vorteilhaft gesenkt werden kann. Diese Überspannungsbeeinflussung der Netzspannung ist auch über einen längeren Zeitraum möglich, da überschüssige elektrische Energie über die einphasige Gleichrichterschaltung 8 beziehungsweise über die dreiphasige Gleichrichterschaltung 9 abgeführt werden kann. Zudem ermöglicht die Stromrichterschaltung eine Regulierung der Netzspannung, insbesondere falls die Netzspannung erhöht oder abgesenkt werden soll. Weiterhin kann die Stromrichterschaltung vorteilhaft als Phasenschieber eingesetzt werden, um eine eventuelle Leitungsfaktorkorrektur des elektrischen Wechselspannungsversorgungsnetzes 1 bei bestimmten gewünschten Betriebsverhalten des elektrischen Wechselspannungsversorgungsnetzes 1 vornehmen zu können. Bei im Wechselspannungsversorgungsnetz 1 auftretenden Oberschwingungen, insbesondere Oberschwingungen, welche durch die Last 2 generiert werden, ist es ferner mit der Stromrichterschaltung möglich, diese Oberschwingungen zu kompensieren. Darüber hinaus kann mit Hilfe der Stromrichterschaltung bei einem auftretenden Lastkurzschluss der damit einhergehende Kurzschlussstrom durch gezieltes gegenphasiges Einspeisen einer Spannung limitiert werden.

### Bezugszeichenliste

- 1: Wechselspannungsversorgungsnetz
- 2: elektrische Last
- 3: Wechselrichter
- 4: Speicherkondensator
- 5: Speiseeinrichtung
- 6: Mehrphasentransformator
- 6.1: Primärseite des Mehrphasentransformators
- 6.2: Sekundärseite des Mehrphasentransformators
- 7: Einphasentransformator
- 7.1: Primärseite des Einphasentransformators
- 7.2: Sekundärseite des Einphasentransformators
- 8: einphasige Gleichrichterschaltung
- 9: dreiphasige Gleichrichterschaltung
- 10: Speichereinheit
- 11: Leistungshalbleitertrennschalter
- 12: Abtrennschalter
- 13: dreiphasige Oberschwingungsfilterschaltung
- 14: einphasige Oberschwingungsfilterschaltung
- UR, US, UT: Spannungsquellen

## Patentansprüche

1. Stromrichterschaltung zur Spannungserhaltung in einem elektrischen Wechselspannungsversorgungsnetz (1), wobei das elektrische Wechselspannungsversorgungsnetz (1) für jede Phase (R; S; T) eine zugehörige Spannungsquelle (UR; US; UT) zur Speisung einer elektrischen Last (2) aufweist, wobei die Stromrichterschaltung für jede Phase (R; S; T) jeweils einen Wechselrichter (3) aufweist, der gleichspannungsseitig über einen Speicherkondensator (4) mit einer Speiseeinrichtung (5) verbunden ist, **dadurch gekennzeichnet,**
**dass** jeder Wechselrichter (3) wechselspannungsseitig seriell in die jeweilige Phase (R; S; T) zwischen der zugehörigen Spannungsquelle (UR; US; UT) und der elektrischen Last (2) eingeschaltet ist und dass die Speiseeinrichtung (5) wechselspannungsseitig an mindestens zwei Phasen (R; S; T) zwischen den zugehörigen Spannungsquellen (UR; US; UT) und den jeweiligen Wechselrichtern (3) angeschlossen ist.

2. Stromrichterschaltung nach Anspruch 1, **dadurch gekennzeichnet, dass** bei einem einphasigen elektrischen Wechselspannungsversorgungsnetz (1) der Wechselrichter (3) an eine erste Phase (R; S) und die Speiseeinrichtung (5) an die erste Phase (R; S) und an eine zweite Phase (R; S) angeschlossen sind.

3. Stromrichterschaltung nach Anspruch 1, **dadurch gekennzeichnet, dass** bei einem mehrphasigen elektrischen Wechselspannungsversorgungsnetz (1) der Wechselrichter (3) an eine erste Phase (R; S; T) und die Speiseeinrichtung (5) an eine zweite Phase (R; S; T) und an eine dritte Phase (R; S; T) angeschlossen sind.

4. Stromrichterschaltung nach Anspruch 1, **dadurch gekennzeichnet, dass** bei einem mehrphasigen elektrischen Wechselspannungsversorgungsnetz (1) der Wechselrichter (3) an eine erste Phase (R; S; T) und die Speiseeinrichtung (5) an die erste Phase (R; S; T), an eine zweite Phase (R; S; T) und an eine dritte Phase (R; S; T) angeschlossen sind.

5. Stromrichterschaltung nach Anspruch 4, **dadurch gekennzeichnet, dass** die Speiseeinrichtung (5) einen Mehrphasentransformator (6) aufweist, der mit seiner Primärseite (6.1) an die erste Phase (R; S; T), an die zweite Phase (R; S; T) und an die dritte Phase (R; S; T) zwischen den zugehörigen Spannungsquellen (UR; US; UT) und den jeweiligen Wechselrichtern (3) angeschlossen ist.

6. Stromrichterschaltung nach Anspruch 3, **dadurch gekennzeichnet, dass** die Speiseeinrichtung (5) einen Einphasentransformator (7) aufweist, der mit seiner Primärseite (7.1) an die zweite Phase (R; S; T) und an die dritte Phase (R; S; T) zwischen den zugehörigen Spannungsquellen (UR; US; UT) und den jeweiligen Wechselrichtern (3) angeschlossen ist.

7. Stromrichterschaltung nach Anspruch 5, **dadurch gekennzeichnet, dass** die Speiseeinrichtung (5) eine an einer Sekundärseite (6.2) des Mehrphasentransformators (6) angeschlossene dreiphasige Gleichrichterschaltung (9) aufweist, die gleichspannungsseitig mit dem Speicherkondensator (4) verbunden ist.

8. Stromrichterschaltung nach Anspruch 6, **dadurch gekennzeichnet, dass** die Speiseeinrichtung eine an einer Sekundärseite (7.2) des Einphasentransformators (7) angeschlossene einphasige Gleichrichterschaltung (8) aufweist, die gleichspannungsseitig mit dem Speicherkondensator (4) verbunden ist.

9. Stromrichterschaltung nach Anspruch 7, **dadurch gekennzeichnet, dass** eine parallel zur Sekundärseite (6.2) des Mehrphasentransformators (6) geschaltete und mit der dreiphasigen Gleichrichterschaltung (9) verbundene dreiphasige Oberschwingungsfilterschaltung (13) vorgesehen ist, die einen auf eine Oberschwingungsfrequenz abgestimmten Resonanzkreis aufweist.

10. Stromrichterschaltung nach Anspruch 8, **dadurch gekennzeichnet, dass** eine parallel zur Sekundärseite (7.2) des Einphasentransformators (7) geschaltete und mit der einphasigen Gleichrichterschaltung (8) verbundene einphasige Oberschwingungsfilterschaltung (14) vorgesehen ist, die einen auf eine Oberschwingungsfrequenz abgestimmten Resonanzkreis aufweist.

11. Stromrichterschaltung nach einem der Ansprüche 7 bis 10, **dadurch gekennzeichnet, dass** die Speiseeinrichtung (5) eine gleichspannungsseitig parallel zu der Gleichrichterschaltung (8; 9) geschaltete Speichereinheit (10) aufweist, wobei die Speichereinheit (10) mit dem Speicherkondensator (4) verbunden ist.

12. Stromrichterschaltung nach einem der vorhergehenden Ansprüche, **dadurch gekennzeichnet, dass** ein ansteuerbarer Leistungshalbleitertrennschalter (11) parallel zur Wechselspannungsseite des Wechselrichters (3) geschaltet ist.

13. Stromrichterschaltung nach einem der vorhergehenden Ansprüche, **dadurch gekennzeichnet, dass** für jede Phase (R; S; T) ein parallel zu jedem in die jeweilige Phase (R; S; T) eingeschalteten Wechselrichter (3) geschalteter Abtrennschalter (12) vorgesehen ist.
